## Europäisches Patentamt

## European Patent Office

## Office européen des brevets

(19)

(11) Veröffentlichungsnummer: **0 064 624**
**B1**

(12) # EUROPÄISCHE PATENTSCHRIFT

(45) Veröffentlichungstag der Patentschrift:
**27.12.85**

(21) Anmeldenummer: **82103342.0**

(22) Anmeldetag: **21.04.82**

(51) Int. Cl.⁴: **B 21 D 53/28** // B60N1/06, F16H55/02

(54) **Verfahren zur Herstellung von Gelenkteilen an Drehgelenken, insbesondere für Sitze mit verstellbarer Rückenlehne.**

(30) Priorität: **13.05.81 DE 3118896**

(43) Veröffentlichungstag der Anmeldung:
**17.11.82 Patentblatt 82/46**

(45) Bekanntmachung des Hinweises auf die Patenterteilung:
**27.12.85 Patentblatt 85/52**

(84) Benannte Vertragsstaaten:
**FR GB IT**

(56) Entgegenhaltungen:
**CH - A - 95 403**
**DE - A - 2 807 516**
**DE - B - 1 160 395**
**FR - A - 2 432 952**
**US - A - 4 254 540**

**TOOLING AND PRODUCTION, Band 37, Nr. 7, Oktober 1971, Seiten 52-55, Cleveland, USA, J. KLAVON: "Transfer dies compete with fine blanking"**

(73) Patentinhaber: **KEIPER RECARO GmbH & Co., Büchelstrasse 54-58, D-5630 Remscheid 14 (DE)**

(72) Erfinder: **Pelz, Herbert, Im Rosenhof 20, D-5630 Remscheid (DE)**

(74) Vertreter: **Buse, Karl Georg, Dipl.-Phys., Patentanwälte Dipl.-Phys. Buse Dipl.-Phys. Mentzel Dipl.-Ing. Ludewig Unterdörnen 114 Postfach 20 02 10, D-5600 Wuppertal 2 (DE)**

**Beschreibung**

Die Erfindung betrifft ein Verfahren zur Herstellung von Gelenkteilen an Drehgelenken, insbesondere für Sitze mit verstellbarer Rückenlehne, wobei an die Gelenkteile als Bestandteile einer Ver- und Feststelleinrichtung einstückig mit diesen verbundene Zahnräder bildende Ausdrückungen angeformt sind, die durch Feinstanzen aus einem ebenen Blechzuschnitt ausgepreßt werden.

Aus der FR-A 2 432 952 ist ein Drehgelenk der vorgenannten Art bekannt, dessen Gelenkteile durch einen Feinstanzvorgang ausgeprägte, als Zahnräder ausgebildete Ausdrückungen aufweisen. Diese aus einem ebenen Blechzuschnitt ausgeprägten Ausdrückungen sind derart gestaltet, daß bei dem einen Gelenkteil ein Innenzahnkranz gebildet wird, während die Ausdrückung des anderen Gelenkteiles ein Stirnzahnrad bildet. Die Zähne dieser durch einen Feinstanzvorgang gebildeten Zahnräder weisen an ihren Zahnköpfen, ausgehend von der freien Stirnseite, zur Verbindungsstelle hinweisende Stanzeinzüge auf, so daß die Zähne an ihrer Stirnseite im Kopfbereich wie etwa angeschrägt aussehen. Bei den vorbekannten Gelenkteilen ist es zwar gelungen, die Ausdrückungen so anzuordnen, daß die Blechstärker der gesamten Zahnbreite entsprechen kann. Dies wird beim Feinstanzvorgang durch die Ausformung von Wandbrückenteilen im Bereich der Lücken zwischen den tragenden Zähnen erreicht. Allerdings ist auch bei dieser vorbekannten Lösung der durch den Feinstanzvorgang bedingte Stanzeinzug vorhanden, der bei der kräftemäßigen Auslegung der Verzahnung zu berücksichtigen ist und als Zuschlag auf die tatsächlich tragende Zahnbreite hinzugerechnet werden muß, wenn die Stärke des das Gelenkteil bildenden Blechzuschnitts gewählt wird. Deshalb ist die Dicke dieser Gelenkteile größer als sie eigentlich zu sein brauchte, wenn der Stanzeinzug vermeidbar wäre.

Die Aufgabe der Erfindung besteht darin, Gelenkteile mit durch Feinstanzen angeformten Zahnrädern zu verbessern, in dem der Stanzeinzug an den Zahnköpfen wesentlich reduziert wird.

Diese Aufgabe ist erfindungsgemäß dadurch gelöst, daß zusammen und im gleichen Arbeitsgang mit dem die Zahnräder aus den Gelenkteilen ausdrückenden Feinstanzvorgang im Bereich des Fußkreises jeder Verzahnung eine Werkstoff zu den Zahnköpfen hin verdrängende Ringnut eingedrückt wird. Dadurch wird der Werkstoff aus dem Bereich der Ringnut gezwungen, zum Zahnkopf hin abzufließen, so daß der sonst durch den Stanzeinzug gebildete Freiraum von dem abfließenden Werkstoff weitgehend ausgefüllt wird. Wie Versuche bestätigt haben, reduziert sich der Zahneinzug am Zahnkopf um ca. 90%, wodurch der Vorteil erzielt wird, daß die Belastbarkeit der Zähne sich um 30% erhöht. Es läßt sich damit die Zahnbreite und demzufolge die Materialstärke des Gelenkteiles reduzieren, was wiederum bei gleicher Belastbarkeit des Gelenkbeschlages zu Gewichtseinsparungen führt.

Vorteilhaft wird die Ringnut auf der Verbindungsstelle zwischen der Ausdrückung und dem zugehörigen Gelenkteil abgekehrten Seite eingepreßt. Zum definierten Abfließen des aus der Ringnut verdrängten Werkstoffes zum Zahnkopf hin ist die Ringnut vorteilhaft in die Ausdrückung jeden Zahnrades deren jeweiligen Fußkreis anschneidend eingepreßt.

Obwohl die Ringnut je nach Zahnform, Materialstärke, Qualität und Abhängigkeit von Belastungskreterien gestaltet werden kann, ist nach einer weiteren vorteilhaften Ausführungsform der Erfindung die Ringnut in Übereinstimmung ihrer Querschnittsmitte mit dem Fußkreis des jeweiligen Zahnrades auf gleicher Umfangsebene eingepreßt.

Die Erfindung ist in Ausführungsbeispielen in der Zeichnung dargestellt und wird nachfolgend näher erläutert. Es zeigen:

Fig. 1 ein Drehgelenk in einer Seitenansicht von der Bedienungsseite her gesehen,

Fig. 2 das aus Fig. 1 ersichtliche Drehgelenk in einem Längsschnitt nach der Linie II-II von Fig. 1, der an seinen kämmenden Verzahnungsteilen die erfindungsgemäß eingepreßte Ringnut im Bereich des Fußkreises aufweist,

Fig. 3 den aus Fig. 2 ersichtlichen Zahneingriff von Innenzahnkranz und Stirnrad in einem gegenüber Fig. 2 vergrößerten Maßstab, im Schnitt nach der Linie III-III von Fig. 4,

Fig. 4 den Zahneingriff von Innenzahnkranz und Stirnrad in einem Vertikalschnitt nach der Linie IV-IV von Fig. 3,

Fig. 5—8 zeigen am Beispiel des Innenzahnkranzes verschiedenartig geformte Ringnuten.

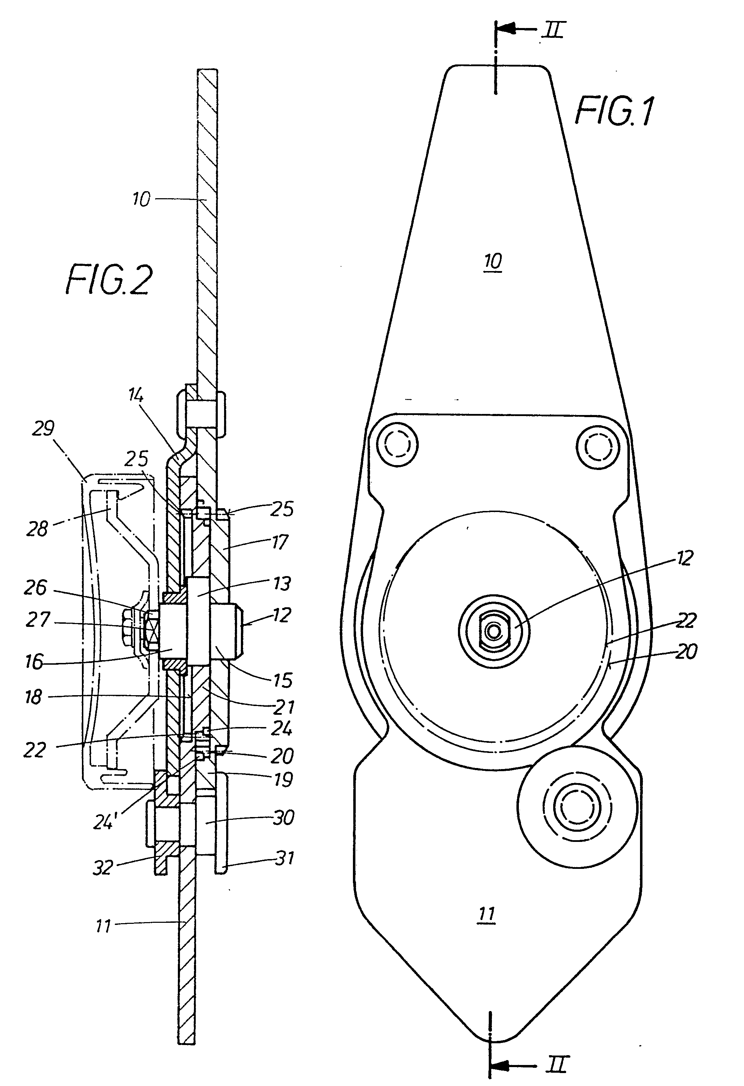

Die Rückenlehne eines Kraftfahrzeugsitzes ist mit dessen Sitzteil vielfach über ein Drehgelenk schwenkbar verbunden. Dieses aus den Fig. 1 und 2 ersichtliche Drehgelenk weist einen mit der Rückenlehne verbindbaren Gelenkteil 10 und einen mit dem Sitzteil verbindbaren Gelenkteil 11 auf, wobei die beiden Gelenkteile über eine Schwenkachse 12 drehbar miteinander verbunden sind. Die Schwenkachse 12 weist einen Exzenterabschnitt 13 auf, auf welchem sich bei dem dargestellten Ausführungsbeispiel der mit dem Sitzteil verbindbare Gelenkteil 11 drehgelenkig abstützt. Der mit der Rückenlehne verbindbare Gelenkteil 10 ist beispielsweise durch Vernieten mit einer Stützlasche 14 fest verbunden, die sich zusammen mit dem Gelenkteil 10 drehbar auf den zentrischen Abschnitten 15 und 16 der Schwenkachse 12 abstützen. Jede der beiden Gelenkteile 10 und 11 weist eine Ausdrückung 17 bzw. 18 auf, wobei die Ausdrückung 17 des Gelenkteiles 10 eine einen Innenzahnkranz 19 bildende Innenverzahnung 20 freigibt, während die Ausdrückung 18 als Stirnrad 21 mit einer Außenverzahnung 22 ausgebildet ist.

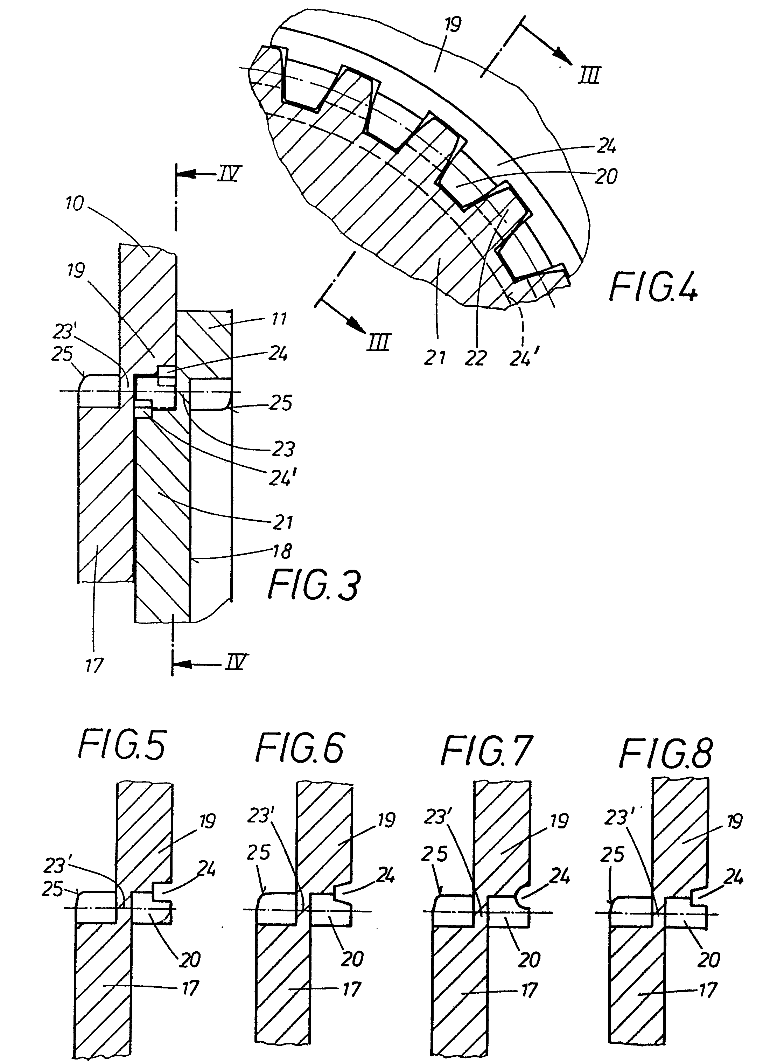

Bei der das Stirnrad 21 bildenden Ausdrückung 18 ist im Übergangsbereich zwischen dem Gelenkteil 11 und der Ausdrückung 18 eine Verbindungsstelle 23, der eine zwischen dem Innenzahnkranz 19 und der Ausdrückung 17 vorhandene Verbindungsstelle 23' des anderen Gelenkteiles 10 entspricht, und über die eine einstückige Verbindung zwischen dem Gelenkteil einerseits und der zugehörigen Ausdrückung andererseits geschaffen ist. Die jeweilige Ausdrückung 17 bzw. 18 wird in einem Feinstanzvorgang aus dem vorhandenen Gelenkteil 10 bzw. 11 ausgedrückt, wobei gleichzeitig die Verzahnung 20 des Innenzahnkranzes 19 bei dem einen Gelenkteil und entsprechend bei dem anderen Gelenkteil die Verzahnung 22 des Stirnrades 21 mitangepreßt wird. Der auf der einen Seite angeformten Verzahnung 20 bzw. 22 eines jeden Gelenkteiles 10 bzw. 11 entspricht auf der anderen Seite ein entsprechendes Gegenprofil, das in Umfangsrichtung gegenüber der Verzahnung um die halbe Zahnteilung versetzt ist. Auf der von der Verbindungsstelle 23 bzw. 23' wegweisenden Stirnseite der Verzahnung 20 bzw. 22 ist im Bereich des Fußkreises sowohl des Innenzahnkranzes 19 als auch des Stirnrades 21 gleichzeitig mit dem Verformungsvorgang eine Ringnut 24 bzw. 24' eingepreßt. Durch das gleichzeitige Einpressen einer solchen Ringnut im Bereich des Zahnfußes erfolgt eine definierte Werkstoffverdrängung zu jedem Zahnkopf hin, so daß Stanzeinzüge 25, wie sie an den Oberkanten der Gegenprofile auftreten, bei den Zähnen der Verzahnungen 20 und 22 weitgehend reduziert sind, so daß die volle Zahnbreite zur Verfügung steht, wodurch die Zahnüberdeckung verbessert wird. Am Beispiel des Innenzahnkranzes 19 sind in den Fig. 5 bis 8 verschieden geformte Ringnuten 24 dargestellt. Die Größe und die Form dieser Ringnuten ist jeweils in Abhängigkeit von der Zahnform, der Materialstärke, der Qualität und der Belastungskriterien auszulegen. Dabei kann der Querschnitt der Ringnut 24, wie in Fig. 5 rechteckförmig, wie in Fig. 6 trapezförmig, wie in Fig. 7 halbkreisförmig oder wie in Fig. 8 halbtrapezförmig, gestaltet sein. Es sind jedoch auch noch weitere Querschnittsformen denkbar.

Bei dem aus der Ausdrückung 18 bestehenden Stirnrad 21 ist dessen Kopfkreis mindestens um eine Zahnhöhe kleiner als der Fußkreis des die Ausdrückung 17 umfassenden, eine Innenverzahnung 20 aufweisenden Innenzahnkranzes 19. Die Zähnezahlen des Innenzahnkranzes 19 und des Stirnrades 21 unterscheiden sich um wenigstens einen Zahn, so daß bei Drehung der Schwenkachse 12 eine Relativbewegung zwischen dem Innenzahnkranz 19 und dem Stirnrad 21 und somit auch zwischen den Gelenkteilen 10 und 11 zustande kommt. Dabei hält der Exzenterabschnitt 13 der Schwenkachse 12 die Innenverzahnung 20 an einer Stelle im Eingriff mit der Außenverzahnung 22 des auf dem Exzenterabschnitt 13 der Schwenkachse 12 drehbar gelagerten Stirnrades 21.

Der in einer Bundbuchse der Stützlasche 14 gelagerte zentrische Abschnitt 16 der Schwenkachse 12 tritt mit einem Zapfen 26 über die Stützlasche 14 nach außen vor, wobei dieser Zapfen 26 auf zwei einander gegenüberliegenden Seiten mit einer Anflachung 27 versehen ist. Dieser Zapfen 26 dient der drehfesten Aufnahme einer in strichpunktierten Linien in Fig. 2 dargestellten Mitnehmerscheibe 28, an der ein ebenfalls strichpunktiert dargestelltes Handrad 29 befestigt ist. Zur Sicherung des axialen Zusammenhaltes zwischen den Gelenkteilen 10 und 11 dient beispielsweise ein in dem Gelenkteil 11 festgelegter Kopfbolzen 30, der einerseits mit seinem Kopfansatz 31 die Randzone des Innenzahnkranzes 19 übergreift und andererseits mit einem Bund der Buchse 32 die Randrohre der Stützlasche 14 in radialer Richtung überragt. Zur Befestigung der Gelenkteile 10 und 11 an der Rückenlehne bzw. am Sitzteil mögen entweder nicht dargestellte Befestigungsschrauben oder aber ebenfalls nicht dargestellte Buckelsicken zur Schweißverbindung dienen.

Zur Herstellung von einstückig mit den Gelenkteilen verbundenen, Verzahnungen aufweisenden Ausdrückungen, die durch Feinstanzen aus einem ebenen Blechzuschnitt ausgedrückt sind, ist gleichzeitig und zusammen mit dem Feinstanzvorgang die Ringnut im Bereich des Zahnfußes im gleichen Arbeitsgang eingedrückt, so daß der aus der Ringnut verdrängte Werkstoff zwangsläufig zu den Zahnköpfen hin abfließt und den sonst üblichen Stanzeinzug am Zahnkopfbereich wesentlich reduziert.

Wie bereits erwähnt, sind die dargestellten Ausführungen lediglich beispielsweise Verwirklichungen der Erfindung, die keinesfalls allein darauf beschränkt ist. Es sind vielmehr noch manche anderen Ausführungen und Ausgestaltungen der Erfindung möglich. So ist es beispielsweise denkbar, die Ringnut bei allen Zahnrädern einzusetzen, die aus einem Blechzuschnitt ausgepreßt werden, um den Stanzeinzug am Zahnkopf zu vermindern. Dabei versteht es sich, daß derartig hergestellte Zahnräder nicht auf den vorbeschriebenen Anwendungsfall eines Drehgelenks für Fahrzeugsitze beschränkt sind, sondern auch bei anderen Stellgetrieben, wie beispielsweise Sitzlängsverstellvorrichtungen, Sitzhöhenverstellvorrichtungen, Fensterhebern od. dgl. verwendet werden können.

**Patentansprüche**

1. Verfahren zur Herstellung von Gelenkteilen an Drehgelenken, insbesondere für Sitze mit verstellbarer Rückenlehne, wobei an die Gelenkteile (10, 11) als Bestandteile einer Ver- und Feststelleinrichtung einstückig mit diesen verbundene, Zahnräder (19, 21) bildende Ausdrückungen (17, 18) angeformt sind, die durch Feinstanzen aus einem ebenen Blechzuschnitt ausgepreßt werden, dadurch gekennzeichnet, daß zusammen und im gleichen Arbeitsgang mit dem die Zahnräder (19, 21) aus den Gelenkteilen (10, 11) ausdrückenden Feinstanzvorgang im Bereich des Fußkreises jeder Verzahnung eine Werkstoff zu den Zahnköpfen hin verdrängende Ringnut (24, 24') eingedrückt wird.

2. Verfahren nach Anspruch 1, dadurch gekennzeichnet, daß die Ringnut (24, 24') auf der der Verbindungsstelle (23, 23') zwischen der Ausdrückung (17, 18) und dem zugehörigen Gelenkteil (10, 11) abgekehrten Seite eingepreßt wird.

3. Verfahren nach Anspruch 1 und/oder 2, dadurch gekennzeichnet, daß die Ringnut (24, 24') in die Ausdrückung (17, 18) jeden Zahnrades (19, 21), deren jeweiligen Fußkreis anschneidend, eingepreßt ist.

4. Verfahren nach einem oder mehreren der vorhergehenden Ansprüche, dadurch gekennzeichnet, daß die Ringnut (24, 24') in Übereinstimmung ihrer Querschnitte mit dem Fußkreis des jeweiligen Zahnrades (19, 21) auf gleicher Umfangsebene eingepreßt ist.

## Claims

1. A method of fabricating joint elements of articulating joints, in particular for seats with adjustable backrest, the joint elements (10, 11) having formed thereon as parts of an adjusting and locking arrangement and integral with the same raised portions (17, 18) providing gears (19, 21), which have been pressed out from a plane sheet metal blank by fine tooling, characterized in that together and in the same operation with the fine tooling action pressing out the gears (10, 21) from the joint elements (10, 11), an annular groove (24, 24') is pressed in in the area of the root circle of each toothing, driving material towards the tips of the teeth.

2. A method as claimed in the claim 1, characterized in that the annular groove (24, 24') is pressed in on the side turned away from the junction (23, 23') between the raised portion (17, 18) and the related joint element (10, 11).

3. A method as claimed in the claim 1 and/or 2, characterized in that the annular groove (24, 24') is pressed into the raised portion (17, 18) of each gear (19, 21) overlapping the respective root circle thereof.

4. A method as claimed in any one or several of the preceding claims, characterized in that the annular groove (24, 24') is pressed in on the same peripheral plane with its cross-sectional center being in register with the root circle of the respective gear (19, 21).

## Revendications

1. Procédé de fabrication des parties articulées d'articulations tournantes, notamment pour des sièges avec dossier réglable, consistant à former sur les parties articulées (10, 11), comme constituants d'un dispositif de manoeuvre et de blocage, des parties repoussées (17, 18) reliées de façon monobloc auxdites parties articulées et formant des engrenages (19, 21), ces parties repoussées étant réalisées par poinçonnage de précision à partir d'un flan de tôle plane, caractérisé en ce que, en même temps et dans la même opération que le processus de poinçonnage de précision façonnant les engrenages (19, 20) dans les parties articulées (10, 11), une rainure annulaire (24, 24') est formée par repoussage dans la zone du cercle de pied de chaque denture et refoule le matériau vers les têtres de dents.

2. Procédé selon la revendication 1, caractérisé en ce que la rainure annulaire (24, 24') est formée par repoussage sur le côté opposé à la zone de liaison (23, 23') entre la partie repoussée (17, 18) et la partie articulée associée (10, 11).

3. Procédé selon la revendication 1 et/ou 2, caractérisé en ce que la rainure annulaire (24, 24') est formée par repoussage dans la partie repoussée (17, 18) de chaque engrenage (19, 21) et chevauche le cercle de pied celui-ci.

4. Procédé selon une ou plusieurs des revendications précédentes, caractérisé en ce que la rainure annulaire (24, 24') est formée par repoussage de manière telle que le centre de sa section transversale coïncide avec le cercle de pied de l'engrenage correspondant (19, 21) dans le même plan périphérique.

FIG.1

FIG.2

FIG.4

FIG.3

FIG.5

FIG.6

FIG.7

FIG.8